(19) Europäisches Patentamt European Patent Office Office européen des brevets

(11) **EP 1 914 588 A2**

(12) **EUROPEAN PATENT APPLICATION**

(43) Date of publication:
   **23.04.2008 Bulletin 2008/17**

(51) Int Cl.:
   **G02F 1/1335** (2006.01)

(21) Application number: **07115436.3**

(22) Date of filing: **31.08.2007**

(84) Designated Contracting States:
   **AT BE BG CH CY CZ DE DK EE ES FI FR GB GR HU IE IS IT LI LT LU LV MC MT NL PL PT RO SE SI SK TR**
   Designated Extension States:
   **AL BA HR MK RS**

(30) Priority: **20.10.2006 KR 20060102466**

(71) Applicant: **Samsung Electronics Co., Ltd.**
   **Suwon-si**
   **Gyeonggi-do 443-742 (KR)**

(72) Inventor: **Cho, Sung Nae**
   **c/o Samsung Advanced Institute of Technology**
   **Yongin-si, Gyeonggi-do (KR)**

(74) Representative: **Greene, Simon Kenneth**
   **Elkington and Fife LLP**
   **Prospect House**
   **8 Pembroke Road**
   **Sevenoaks,**
   **Kent TN13 1XR (GB)**

(54) **Liquid crystal display having reflection region**

(57)    Provided is a liquid crystal display (LCD) which includes a rear substrate (101) and a front substrate (110), a liquid crystal layer (107) located between the rear substrate and the front substrate, and a reflection region (120) formed on the rear substrates which faces the liquid crystal layer, and which reflects light input from outside to illuminate the liquid crystal layer. To increase a vertical component of a reflected light ray, the reflection region includes an array of a plurality of concave reflection curved surfaces (103) formed on a first medium layer (104), in which the concave reflection curved surfaces face the front substrate. The reflection region also includes a scatterer (105) located in a position separated from the concave reflection curved surfaces and toward the front substrate, and a second medium layer (106) formed on the concave reflection curved surface of the first medium layer to fix the scatterer with respect to the concave reflection curved surface.

FIG. 1

**Description**

## BACKGROUND OF THE INVENTION

Apparatuses consistent with the present invention relate to a liquid crystal display (LCD), and more particularly, to an LCD which has a reflection region that reflects external light in a liquid crystal panel.

LCDs are thin and flat display devices made of an array of color or monochrome pixels. An LCD which consumes low power is most widely used as a display for an electronic apparatus that receives power from a battery. LCDs are classified into a transmission type, a reflection type, and a transreflection type, based on the position of a light source for illuminating liquid crystal. In a transmission LCD, the liquid crystal is illuminated by a backlight unit (BLU) located in the rear of a panel.

The LCD is used for products that require a high brightness level, such as flat panel displays, televisions, personal digital assistants (PDAs), and mobile phones. One of the major demerits of the transmission LCD is that it depends on a BLU as the light source, which consumes a large amount of power.

In a reflective LCD, external light is used as a light source for illuminating the liquid crystal. The external light is reflected by a reflector located in the rear of a liquid crystal layer. In the reflective LCD, the absence of an active light source, such as the BLU of the transmission LCD, causes a great decrease in the overall power consumption of a system. Therefore, the reflective LCD can be used for products that require low power consumption, such as digital clocks and calculators.

However, the reflective LCD is not perfect. Since the reflective LCD is not equipped with a light source such as the BLU for illumination, the reflective LCD cannot be used in places with no external light. Also, since light needs to pass through the liquid crystal layer twice, a contrast ratio of the reflective LCD is lower than that of the transmission LCD.

For many commercial devices in which both low power consumption and high quality are important, such as PDAs or mobile phones, technologies of both the reflective LCD and the transmission LCD are combined into a single package to form a transreflective LCD, to obtain advantages from both technologies. The transreflective LCD switches between a reflective LCD mode and a transmission LCD mode based on the conditions of external surrounding light sources. During the daytime or in a place with sufficient external light sources, the reflective LCD mode is activated. During the nighttime or in a dark place, the transmission LCD mode is activated.

Although the transreflective LCD seems to be a perfect solution, a further fine adjustment is required for an appropriate balance between demands for low power consumption and high image displaying quality. Since the transreflection technology is a mere combination of the reflective LCD and the transmission LCD, the problems associated with the reflective LCD and the transmission LCD are also present in the transreflective LCD. One of the major problems of devices using the transreflective LCD technology is an inferior contrast ratio that is caused by the reflective LCD technology.

The problem stems from the fact that light needs to pass through the liquid crystal layer twice in the transreflective LCD, and only a small portion of the external light rays reflected by the reflector contribute to the illumination of the liquid crystal layer. Since light passing through the liquid crystal layer twice in the reflective LCD is unavoidable, only the small portion of external light rays reflected by the reflector that contribute to the illumination can be increased.

Of the light rays reflected by the reflector, a vertical component of a light ray passing through the liquid crystal layer after being reflected by the reflector substantially contributes to the illumination of the liquid crystal layer, and produces a superior contrast ratio performance. Therefore, to improve the contrast ratio performance, there is a need to increase the vertical component of light rays that pass through the liquid crystal layer, so that a ratio of light rays that substantially contribute to the illumination of the liquid crystal layer by the light rays reflected by the reflector is increased.

## SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides an LCD which has a reflection region in a liquid crystal panel, and in which the vertical component of the external light incident on the liquid crystal panel and reflected by the reflection region is increased.

According to an aspect of the present invention, there is provided an LCD which includes a rear substrate and a front substrate, a liquid crystal layer located between the rear substrate and the front substrate, and a reflection region formed on a region of a surface of the rear substrate which faces the liquid crystal layer, and which reflects light input from outside to illuminate the liquid crystal layer. To increase a vertical component of a reflected light ray, the reflection region includes an array of a plurality of concave reflection curved surfaces formed on a first medium layer, and the concave reflection curved surfaces face the front substrate of the rear substrate. The reflection region also includes a scatterer located in a position separated from the concave reflection curved surface and toward the front substrate, and a second medium layer formed on the concave reflection curved surface formed in the first medium layer to fix the scatterer with respect to the concave reflection curved surface.

A section of the concave reflection curved surface may be a parabola.

The scatterer may be located at a focus of the concave reflection curved surface or a position close thereto.

The height of the concave reflection curved surface may correspond to the focal length of the parabola.

The second medium layer may expose a portion of the scatterer.

The second medium layer may completely cover the scatterer.

The second medium layer may be formed of a transparent dielectric material.

The first medium layer may be formed of a metal.

The concave reflection curved surfaces may be regularly arranged without contacting one another, or regularly arranged to contact one another.

The concave reflection curved surfaces and the scatterers may be irregularly arranged to contact or be separated from one another.

The scatterer may be a single spherical scatterer, a spherical core-cell scatterer, or a scatterer having an effective spherical structure formed by a cluster of a plurality of scatter particles.

A scatter particle may be a spherical scattering particle having a core-cell structure and a spherical scattering particle.

The scatterer may be provided to scatter a plurality of color light rays or a single color light ray.

The LCD may be a transreflection type, and may also include a backlight unit provided at the rear of the rear substrate, and a transmission region which transmits an illumination light emitted from the backlight unit toward the liquid crystal layer.

The LCD may also include a color filter located at the front substrate, and the scatterer may scatter a plurality of different color light rays.

The LCD may also include a color filter formed at a position corresponding to the transmission region, and which allows only a color light ray to pass. The scatterer may scatter the color light ray, and the reflection region may work as a color filter component for the color light ray.

The LCD may be of a reflective type.

The scatterer may scatter a color light ray, and the reflection region may work as a color filter with respect to the color light ray, thus eliminating the need for a separate color filter.

The LCD may be of a transreflection type, and may also include a backlight unit provided at the rear of the rear substrate, and a transmission region which transmits an illumination light emitted from the backlight unit toward the liquid crystal layer.

## BRIEF DESCRIPTION OF THE DRAWINGS

The above and other aspects of the present invention will become more apparent by describing in detail exemplary embodiments thereof with reference to the attached drawings in which:

FIGS. 1 and 2 illustrate LCDs according to exemplary embodiments of the present invention;

FIGS. 3 through 5 illustrate various exemplary embodiments of a scatterer disposed in the reflection region of the LCD;

FIGS. 6 through 8 illustrate LCDs according to other exemplary embodiments of the present invention;

FIGS. 9 through 11 illustrate various exemplary embodiments of a concave reflection curve surface arrangement including the scatterer disposed in the reflection region of the LCD;

FIG. 12 is a cross-sectional view taken along line XII-XII of FIG. 10;

FIG. 13 is a cross-sectional view taken along line XIII-XIII of FIG. 11;

FIG. 14 is a cross-sectional view of a shallow parabolic convex reflective surface;

FIG. 15 is a cross-sectional view of a shallow parabolic concave reflective surface;

FIG. 16 illustrates three hollow parabolic convex surfaces formed in a line;

FIG. 17 illustrates three hollow parabolic concave surfaces formed in a line;

FIG. 18 illustrates an apparatus for measuring scattering power;

FIG. 19 illustrates the result of a calculation of scattering power collected within the angular range of $\delta$ indicated in the measuring apparatus of FIG. 18;

FIG. 20 illustrates a parabola;

FIG. 21 illustrates the reflection dynamics in the section of a shallow parabolic concave surface having a height of $y_h=p$;

FIG. 22 illustrates the reflection dynamics in the section of a deep parabolic concave surface having a height of $y_h=2p$;

FIG. 23 illustrates a method of determining the detection angle $\delta$;

FIG. 24 illustrates the structure of the reflection region according to exemplary embodiments of the present invention in which the three structures shown in FIG. 21 are arranged to form a line;

FIG. 25 illustrates the result of a calculation of the scattered power collected within the angular range of δ indicated in the measuring apparatus of FIG. 18 based on the radius of the scatterer;

FIG. 26 illustrates the increase in performance by percentage when the incident angle of a light ray increases by 2° from 0° to 46°;

FIG. 27 illustrates a percent increase in performance when the incident angle of a light ray increases by 2° increments from 2° to 46°;

FIG. 28 illustrates a percent increase in performance when the incident angle of a light ray increases by 2° increments from 4° to 46°; and

FIG. 29 illustrates a percent increase in performance when the incident angle of a light ray increases by 2° increments from 10° to 46°.

## DETAILED DESCRIPTION OF EXEMPLARY

## EMBODIMENTS OF THE INVENTION

Hereinafter, an LCD which has a reflection region that reflects external light in a liquid crystal panel will be described in detail with reference to the attached drawings. In the drawings, scales of elements are exaggerated when necessary for clarity of the drawings. Also, like reference numerals throughout the specification denote like configurations or media.

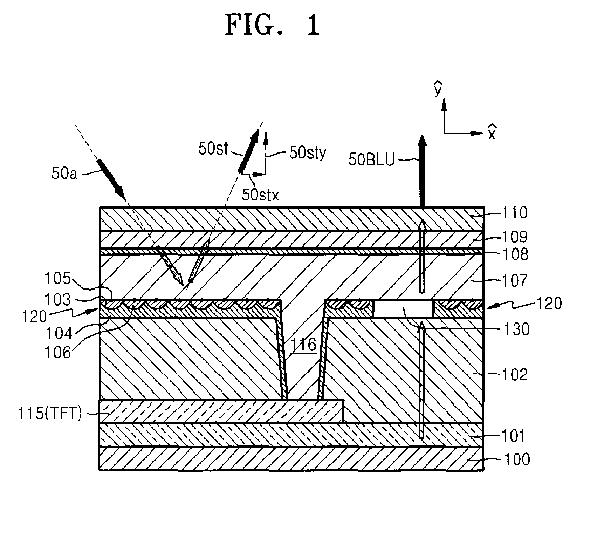

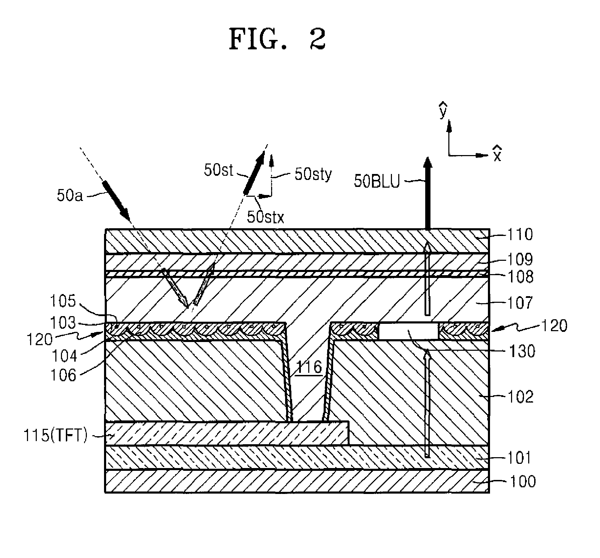

FIGS. 1 and 2 illustrate LCDs according to exemplary embodiments of the present invention. Referring to FIGS. 1 and 2, an LCD according to an exemplary embodiment includes a rear substrate 101, a front substrate 110, a liquid crystal layer 107 located between the rear substrate 101 and the front substrate 110, and a reflection region 120 formed on the rear substrate 101. The reflection region 120 reflects external incident light to illuminate the liquid crystal layer 107, and is formed to increase a vertical component of the reflected light, that is, a component in a y-axis direction in FIG. 1, or a component in a thickwise direction of the LCD. In FIGS. 1 and 2, a thin film transistor (TFT) 115 is formed on the rear substrate 101, and a common electrode 108 is formed on the front substrate 110.

In the LCD according to the present exemplary embodiment, a buffer layer 102 having a contact hole 116 partially exposing the TFT 115 is formed on the rear substrate 101. The buffer layer 102 may be formed of a transparent insulation material. A first medium layer 104 is formed on the buffer layer 102 to be electrically connected to the TFT 115 through the contact hole 116. The first medium layer 104 has an array of a plurality of concave reflection curved surfaces 103 formed on a surface of the first medium layer 104 facing the front substrate 110. A scatterer 105 is provided at a position separated from the concave reflection curved surface 103 and toward the front substrate 110. A second medium layer 106 is provided on the concave reflection curved surfaces 103 of the first medium layer 104 to fix the scatterers 105 with respect to the concave reflection curved surfaces 103.

The first medium layer 104 works as a reflection electrode and can be formed of a metal material, such as aluminum, copper, silver, or gold. The second medium layer 106 can be formed of a transparent dielectric material, such as $SiO_2$. The second medium layer 106 can expose part of the scatterers 105 as shown in FIG. 1, or completely cover the scatterers 105 as shown in FIG. 2.

In the LCD according to an exemplary embodiment of the present invention, the reflection region 120 includes an array of the concave reflection curved surfaces 103 formed in the surface facing the front substrate 110 of the first medium layer 104, the scatterer 105 separated from the concave reflection curved surfaces 103 toward the front substrate 110, and the second medium layer 106 formed on the concave reflection curved surfaces 103 formed in the first medium layer 104 to fix the scatterers 105 with respect to the concave reflection curved surfaces 103.

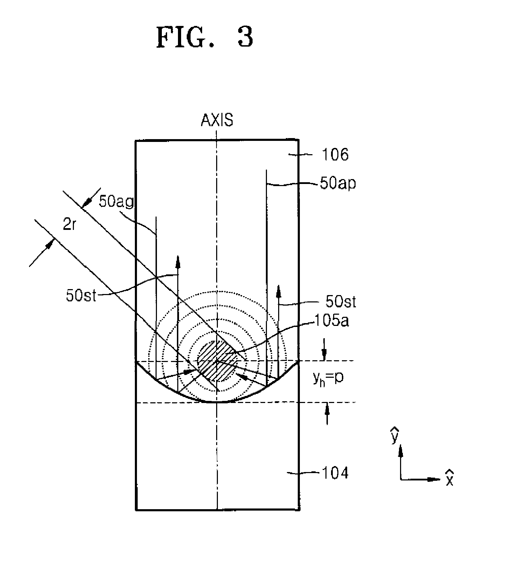

The concave reflection curved surface 103 may be a concave parabolic surface so that a cross-section thereof forms a parabola, as shown in FIG. 3. The scatterer 105 can be located at a focus of the concave reflection curved surface 103 having a cross-section forming a parabola, or at a position slightly off from the focus. The concave reflection curved surface 103 can be formed such that the height $y_h$ thereof is equal to, longer than, or shorter than, the focal length p of the concave reflection curved surface 103. As an example, FIG. 3 shows that the scatterer 105 is located at the focus of the concave reflection curved surface 103, and the height $y_h$ thereof is equal to the focal length p of the concave reflection curved surface 103.

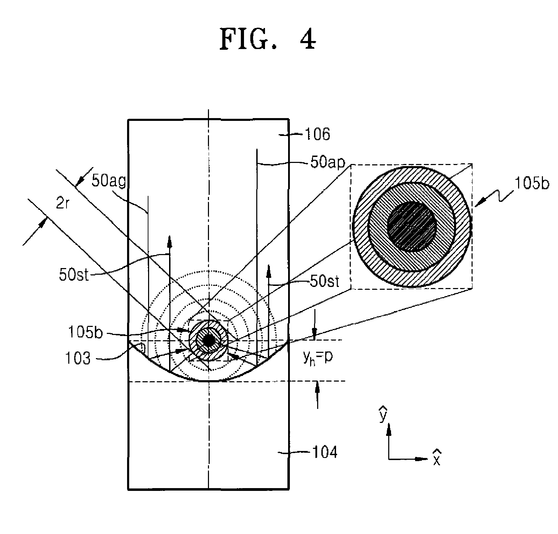

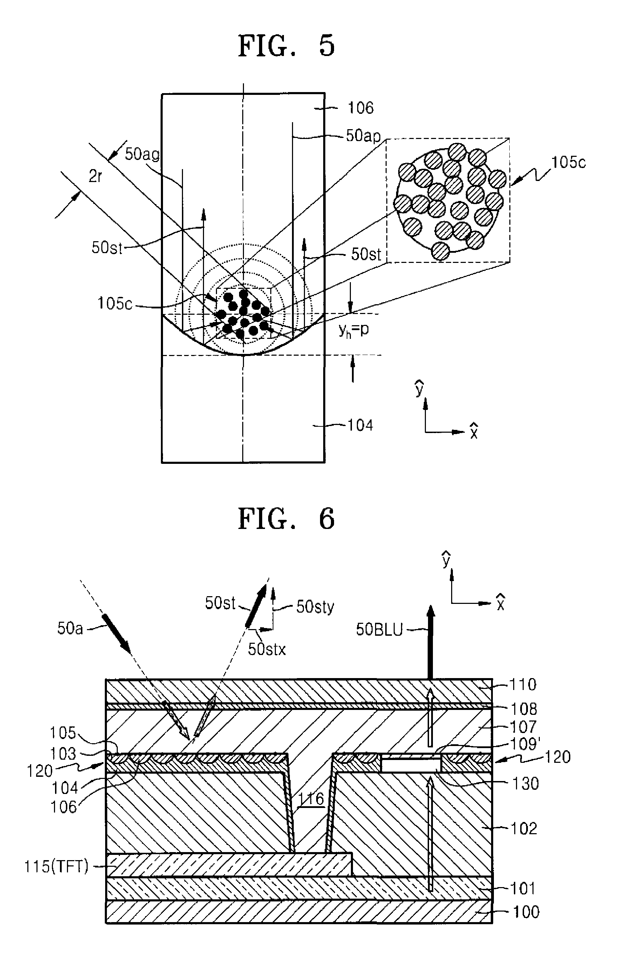

FIG. 3 shows an example in which each scatterer 105 is a single spherical scatterer 105a having a radius r. The spherical scatterer 105a may have a variety of sizes for scattering different colored light needed for displaying color images, instead of a single size. Also, the scatterer 105 may be a spherical core-shell scatterer 105b having a multilayer structure comprising a plurality of media for scattering different colored light, or having a hollow single medium layer or a hollow multiple media layer, as shown in FIG. 4. As shown in FIG. 5, the scatterer 105 can have a structure in which scatter particles form a cluster to make an effective spherical scatterer 105c. The number of layers in the spherical core-shell structure is not limited to the number of layers shown in the example of FIG. 4. In the effective spherical scatterer 105c, the scatter particles are not limited to the same type of particles, and can be formed of many different types of particles. Also, the scatter particles are not limited to be the same size, but may have a variety of sizes. Also, the scatter particles may be spherical scatter particles or spherical core-shell scatter particles.

FIGS. 3 through 5 illustrate cases in which the substantial outer appearance of the scatterer 105 is a geometric sphere. The shape of the scatterer 105 is not limited to the geometric sphere, and the shape can be diversely varied.

When the spherical scatterer 105a, the spherical core-shell scatterer 105b, or the effective spherical scatterer 105c is used as the scatterer 105 of FIGS. 1 and 2, the spherical scatterer 105a, the spherical core-shell scatterer 105b, or the effective spherical scatterer 105c is configured to scatter a plurality of color lights for displaying color images. In this case, as described later, a color filter 109 is further provided to the front substrate 110 for displaying color images.

As another example, in the LCD according to an exemplary embodiment of the present invention, the reflection region 120 may be designed to reflect only a particular wavelength or color of light. To form the reflection region 120, the spherical scatterer 105a, the spherical core-shell scatterer 105b, and the effective spherical scatterer 105c used as the scatterer 105 are provided to scatter a particular wavelength or color of light, such as red (R) light, green (G) light, or blue (B) light. The size of the spherical scatterer 105a is determined by the particular color of light to be scattered. The number or size of the layers of the spherical core-shell scatterer 105b is determined by the particular color of light to be scattered. The size of a scatter particle of the effective spherical scatterer 105c is determined by the particular color of light to be scattered. When the scatterer 105 scatters only a particular color of light, the reflection region 120 works as an effective color filter component of a particular color of light, so that a color filter is not needed. Exemplary embodiments of the LCD according to the present invention in this case will be described later. Also, the vertical component of the light reflected by the reflection region 120 configured as above can be improved, which will be described later.

The LCD according to the present exemplary embodiment preferably further includes a color filter 109 to display color images, as shown in FIGS. 1 and 2. The color filter 109 can be provided immediately below the front substrate 110 as shown in FIGS. 1 and 2, but the present invention is not limited thereto. That is, the color filter 109 can be provided between the reflection region 120 and the liquid crystal layer 107. When the LCD is used to display a monochromic image, the color filter 109 is excluded.

In FIGS. 1 and 2, a back light unit (BLU) 100 is further provided at the rear of the rear substrate 101 to make the LCD according to an exemplary embodiment as a transreflective LCD. The reflection region 120 is partially formed, and a transmission region 130 to transmit illumination light from the BLU 100 is further formed. As shown in FIGS. 1 and 2, the transmission region 130 can be formed in an area that does not overlap the TFT 115. The transmission region 130 is substantially formed as a transparent electrode, and electrically connected to the reflection region 120 that is a reflection electrode.

When an external light source provides sufficient illumination or the amount of light is sufficient during the daytime, the above-described LCD is used as a reflective LCD, as it does not operate the BLU 100, and only light 50a input from the outside is reflected by the reflection region 120 to illuminate the liquid crystal layer 107. In contrast, when an external light source provides insufficient illumination or the amount of light is insufficient during the nighttime, the LCD operates the BLU 100 to illuminate the liquid crystal layer 107 with light 50BLU output from the BLU 100. When there is at least some external light, the external light 50a and the light 50BLU from the BLU100 are used as the illumination light.

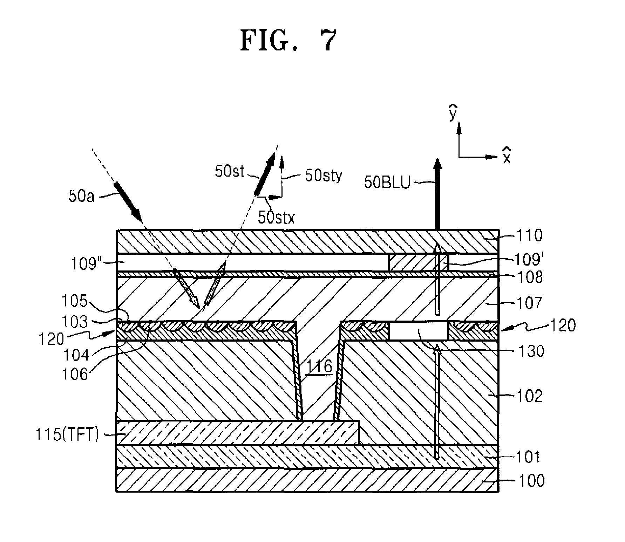

FIGS. 6 and 7 illustrate transreflective LCDs according to other exemplary embodiments of the present invention, in which the scatterer 105 reflects only a particular color of light. The same constituent elements as those shown in FIGS. 1 and 2 are indicated by the same reference numerals and the descriptions of the same constituent elements are omitted herein. FIGS. 6 and 7 illustrate examples adopting the reflection region 120 of FIG. 1. However, the reflection region 120 of FIG. 2 can be also used therefor.

Referring to FIGS. 6 and 7, when the scatterer 105 scatters only a particular color of light, the reflection region 120 reflects a color of light having a particular wavelength or within a particular wavelength range, so that the reflection region 120 substantially works as an effective color filter component with respect to the particular color of light. In this case, a portion shown in each of FIGS. 6 and 7 indicates one of a plurality of sub-pixels forming a pixel of an LCD.

For example, the reflection region 120 reflects red light, green light, or blue light due to the scattering of the scatter 105. Thus, the LCD has a 2-D array of three reflection region units to reflect the red light, green light, and blue light, respectively. When the reflection region 120 reflects only a particular color of light, the color filter 109 of FIG. 1 is not needed.

Instead, a red, green, or blue color filter component 109' is formed in an area corresponding to the transmission region 130, as shown in FIGS. 6 and 7, to pass the same color light as the particular color light reflected by the reflection region 120 and included in the illumination light from the BLU 100. FIG. 6 illustrates an example in which the color filter component 109' is formed on a surface adjacent to the liquid crystal layer 107 of the transmission region 130. FIG. 7 illustrates an example in which the color filter component 109' is formed at the position of the color filter 109 of FIG. 1 and surrounded by a transparent material layer 109". In the cases of FIGS. 1 and 2 in which the scatterer 105 scatters a plurality of color lights, the portion shown in FIGS. 1 and 2 may correspond to one pixel of the LCD, or one of the sub-pixels forming one pixel.

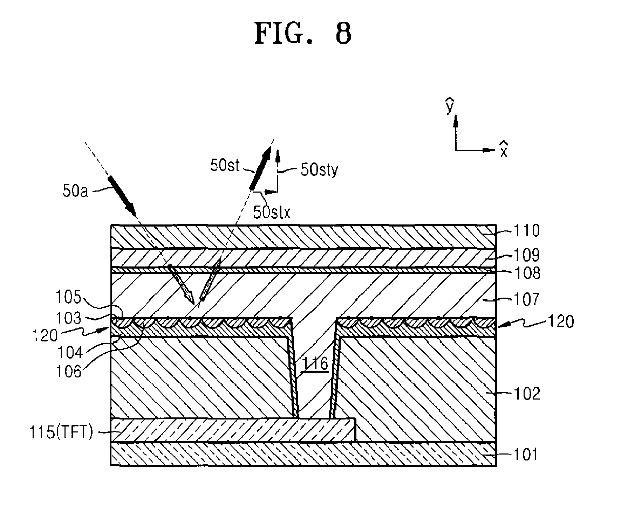

FIG. 8 illustrates a reflective LCD according to an exemplary embodiment of the present invention. As shown in FIG. 8, the LCD according to the present exemplary embodiment may include only the reflection region 120 without the BLU 100 and the transmission region 130, which are shown in FIGS. 1, 2, 6, and 7. In this case, the reflection region 120 can be formed above the entire surface of the rear substrate 101, except for an area for the contact hole 116 for electric connection with the TFT 115. FIG. 8 shows an example in which the structure of the reflection region 120 of FIG. 1 is adopted. Alternatively, the structure of the reflection region 120 of FIG. 2 can also be adopted.

FIG. 8 shows a structure corresponding to that of FIG. 1. Alternatively, the reflective LCD may have a structure corresponding to those of FIGS. 6 and 7. That is, in the reflective LCD according to the present exemplary embodiment, the scatterer 105 may be formed to scatter only a particular color of light and allow the reflection region 120 to work as an effective color filter component of the particular color of light, thereby eliminating the need for the color filter 109. Since this case can be sufficiently deduced from the descriptions and illustrations about the above-described various embodiments, a detailed description thereon will be omitted herein.

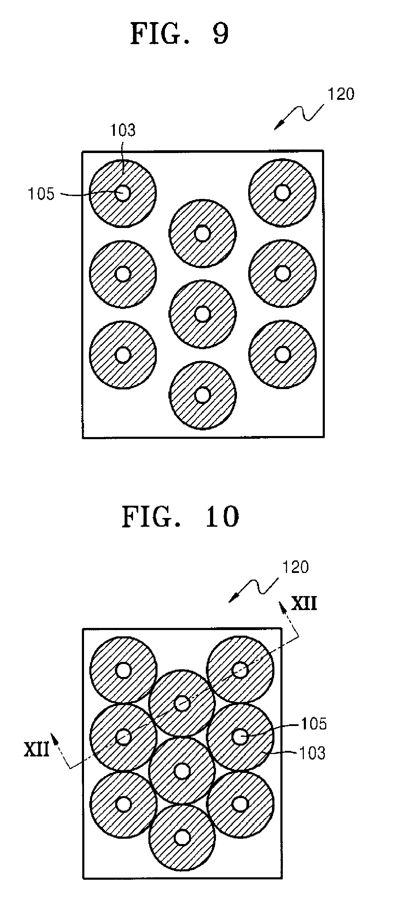

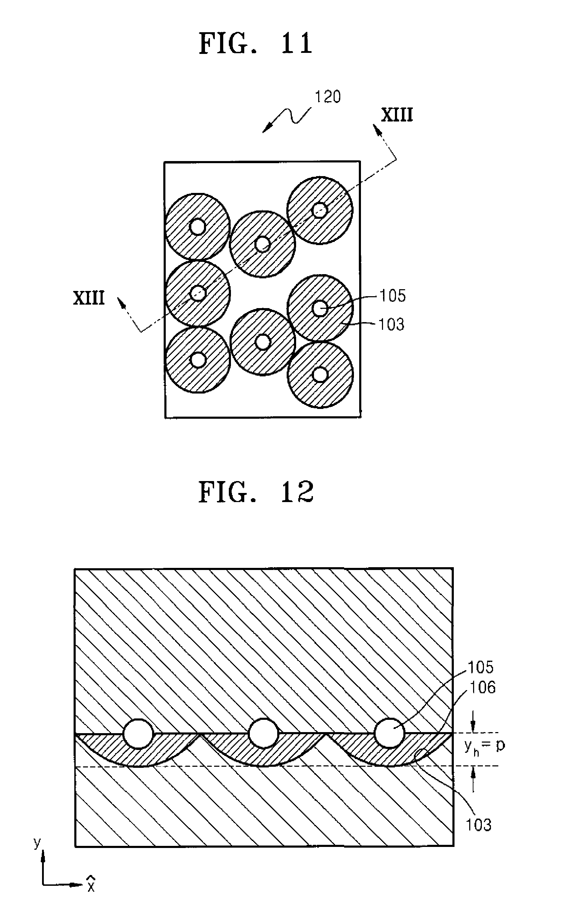

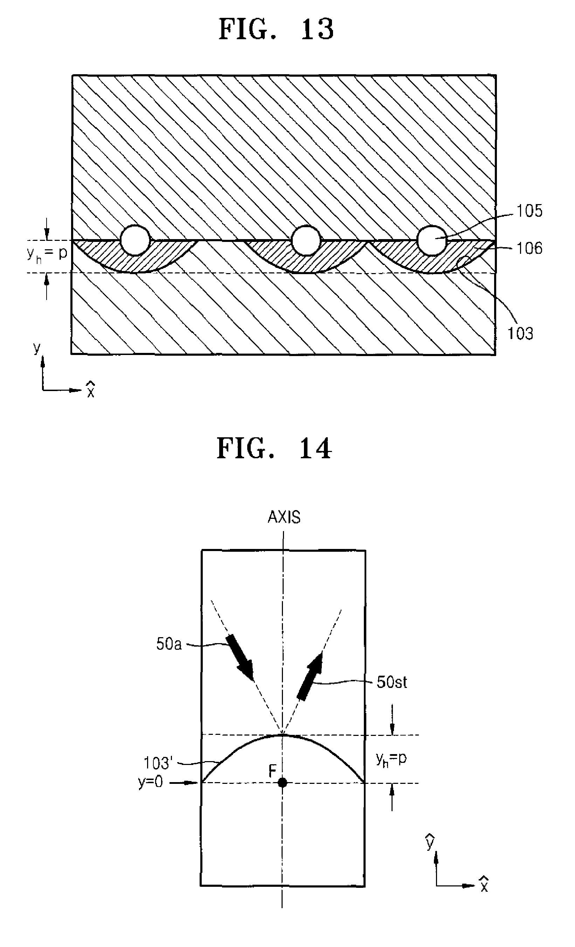

FIGS. 9 through 11 show the arrangements of the concave reflection curved surfaces 103 and the scatterers 105 forming the reflection region 120 used in the LCD according to a variety of exemplary embodiments of the present invention. The concave reflection curved surfaces 103 including the scatterer 105 can be arranged regularly as shown in FIG. 9 and 10, or irregularly as shown in FIG. 11. FIG. 9 shows an example in which the concave reflection curved surfaces 103 are regularly arranged without contacting one another. FIG. 10 shows an example in which the concave reflection curved surfaces 103 are regularly arranged to contact one another. FIG. 11 shows an example in which the concave reflection curved surfaces 103 are irregularly arranged with and without contacting one another. FIG. 12 is a cross-sectional view taken along line XII-XII of FIG. 10. FIG. 13 is a cross-sectional view taken along line XIII-XIII of FIG. 11.

In the above-described LCDs according to the present exemplary embodiments, it is described and illustrated that the TFT 115 is provided above the rear substrate 101 and the transparent common electrode 108 layer is provided below the front substrate 110. However, the present invention is not limited thereto. That is, the TFT 115 may be formed on the front substrate 110, and the common electrode 108 layer may be formed on the rear substrate 101. In this case, since the contact hole 116 is not formed on the rear substrate 101, the buffer layer 102 may be formed on the entire surface of the rear substrate 101, and the common electrode layer 108 may be formed thereon. The common electrode layer 108 may be formed of the medium of the transmission region 130 and the first medium layer 104 of the reflection region 120 for the transreflection type LCD, and may be formed of the first medium layer 104 of the reflection region 120 for the reflective type. Since the above modified examples can be sufficiently deduced from the above descriptions, the illustration thereof will be omitted herein.

In the above description, the LCD according to exemplary embodiments of the present invention is described and illustrated as a structure having the TFT 115. However, the present invention is not limited thereto, and a variety of modifications are possible. The method for improving the vertical component of the light input from the outside and reflected by the reflection region 120 will be described below.

The core technical principle of the reflection type LCD technology is that the light from the external light source that illuminates the liquid crystal layer 107 is guided by adding a reflection layer in the rear of liquid crystal layer 107, so that a need for the BLU 100 is removed. In an ideal reflective LCD, all incident light at an arbitrary incident angle is completely reflected by the reflection layer toward the liquid crystal layer 107.

Referring to FIG. 1, in the ideal reflective LCD, a light ray 50st of FIG. 1 incident from the outside and reflected by the reflection region 120 can be identical to the light ray 50BLU provided from the BLU 100. This means that the light ray 50st has only a component in a y-axis direction, that is, a vertical component. To maximize the vertical component of the reflection light ray 50st, the reflection region 120 needs to be designed such that a component 50sty in the y-axis direction of the reflection light ray 50st is maximized while a component 50stx in the x-axis direction of the reflection light ray 50st is minimized.

To use as a reference in the description of the directed reflectance performance in the LCD according to exemplary embodiments of the present invention, two well-known outlines of a paraboloidal reflective convex and a paraboloidal reflective concave are analyzed. To maintain the analysis to be as concise and detailed as possible, only cross-sections of a paraboloidal convex and a paraboloidal concave are taken into consideration. In the following description, the cross-sections of a paraboloidal convex and a paraboloidal concave are respectively referred to as the parabolic convex and the parabolic concave.

As shown in FIG. 14, a parabolic convex 103' is expressed by Equation 1.

$$y = p - \frac{x^2}{4p}$$

[Equation 1]

In Equation 1, "p" is a focal length. As shown in FIG. 14, F is a focus and the height $y_h$ of the parabolic convex is given by $y_h$=p.

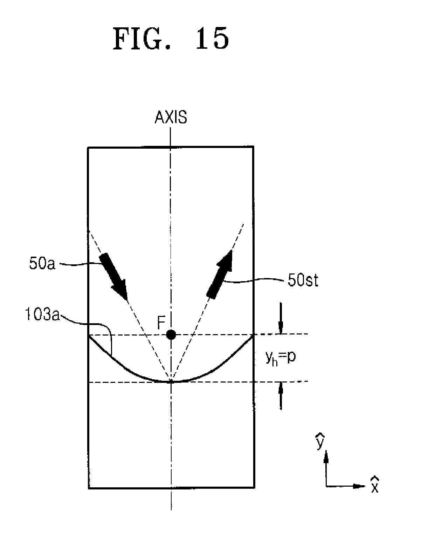

Similarly, the parabolic concave 103a of FIG. 15 is a section defined by Equation 2.

$$y = \frac{x^2}{4p} \qquad \text{[Equation 2]}$$

In Equation 2, "p" is a focal length. As shown in FIG. 15, F is a focus and the depth $y_h$ of the parabolic concave is given by $y_h$=p.

The parabolic convex 103' or the parabolic concave 103a having a height or depth of $y_h$ that is less than or equal to the focal length p can be referred to as a shallow parabolic convex or shallow parabolic concave. Accordingly, the parabolic convex 103' of FIG. 14 and the parabolic concave 103a of FIG. 15 are a shallow parabolic convex and a shallow parabolic concave, respectively.

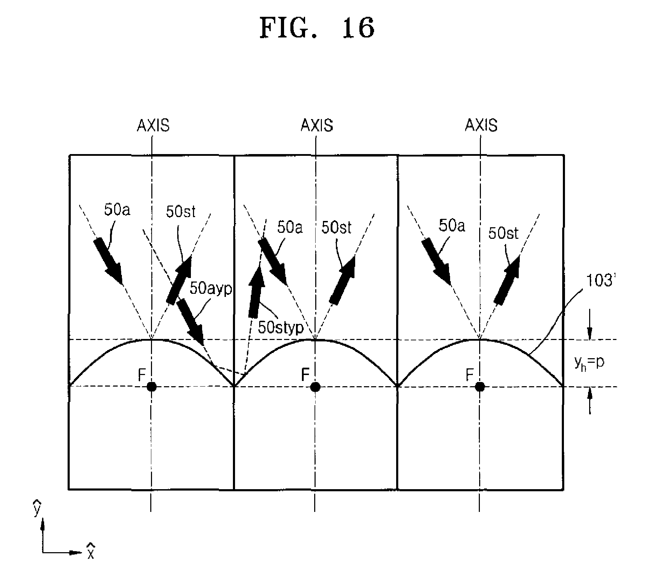

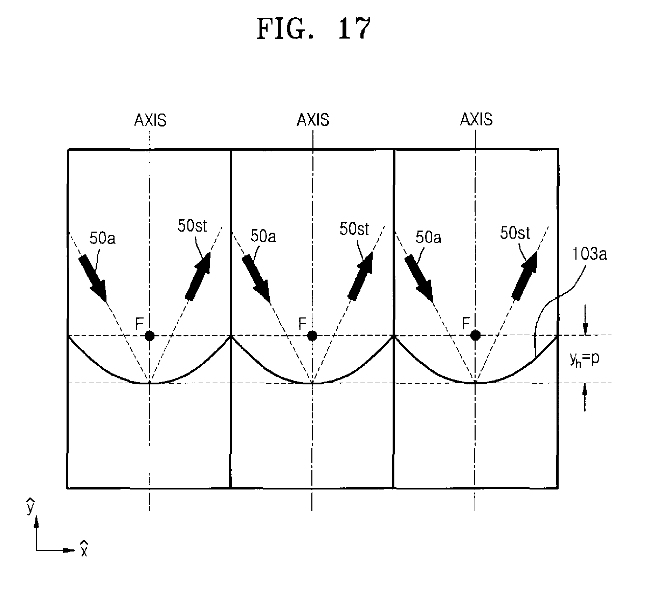

To calculate a reflectance performance comparison between the parabolic convex 103' and the parabolic concave 103a, the structure of FIG. 16 in which three parabolic convexes 103' of FIG. 14 are arranged inline and the structure of FIG. 17 in which three parabolic concaves 103a of FIG. 15 are arranged inline are taken into consideration. The reason for simulating reflectance of the three parabolic convexes 103' or concaves 103a arranged inline, rather than a single convex or concave, is made obvious in FIG. 16.

When the structure of the single parabolic convex 103' is simulated for reflectance, assuming that a detector (not shown) is located somewhere along the y-axis, when a light ray 50ayp of FIG. 16 is reflected, the reflected light ray cannot reach the detector. Thus, in a device using the reflective LCD, the reflection layer is not formed of a single parabolic convex 103', and needs to be formed of a cluster of a plurality of parabolic convexes 103' formed in units. When a plurality of parabolic convexes 103' are clustered in a unit, unlike the structure of the isolated single parabolic convexes 103,' the light ray 50ayp can be scattered by a surface of the neighboring parabolic convex 103', thus producing a light ray 50styp of FIG. 16. Assuming that the detector is located somewhere along the y-axis, the light ray 50 styp is detected by the detector, so that the light ray 50styp contributes to the reflection performance.

The three parabolic convexes 103' or the three parabolic concaves 103a arranged inline sufficiently include all available scattering effects. When the reflectance of three inline parabolic concaves or convexes and the reflectance of five inline parabolic concaves or convexes are compared, the performance of reflectance is simply increased based on the increase in the number of reflection surfaces, while the other characteristics remain the same.

When the performance of the reflector is being determined, the detector is located a distance away from the reflector. The actual number of light rays capable of reaching the detector after being reflected by the reflector indicates the performance of the reflector.

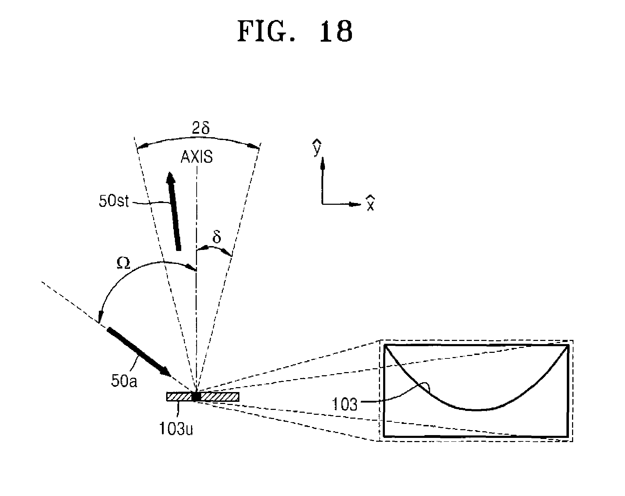

A simulation is performed under the assumption that an apparatus for measuring the performance of the reflector is shown in FIG. 18. The light 50a is incident on a reflection structure at an incident angle of Ω. The incident light 50a is reflected by the reflector 103u, and the reflected light ray is 50st. The detector, which is located at a position separated by 1 m from the reflector 103u in the y-axis direction, can detect only light rays 50st reflected within an angular range less than or equal to a predetermined angle δ.

For example, assuming that human eyes are the detector, the detection angle range δ can be related to the size of the human eyes. A magnified portion in FIG. 18 showing the section of the concave reflection curved surface 103 is added merely for the purpose of illustration.

In the measuring apparatus of FIG. 18, the scattering power collected within the angular range δ, which is the half of the window width of the measuring apparatus, is calculated using a finite difference time domain (FDTD) method. The FDTD calculation is performed using software purchased from Lumerical Solutions, Inc. (Suite 660-789 West Pender Street, Vancouver, British Columbia, V6C1 H2, Canada). In all calculations, the reflection surface is formed of aluminum, and the medium in which the incident beam 50a and reflected or scattered beam 50st exists is a vacuum state, that is, a medium with a refractive index of unity. The beam is a plane wave whose polarization is set to a transverse electric (TE) mode. In all calculations, the incident beam 50a has a wavelength of 550 nm in a vacuum state. The scattered power in a far field is calculated at a position separated by 1m from the scatterer 105.

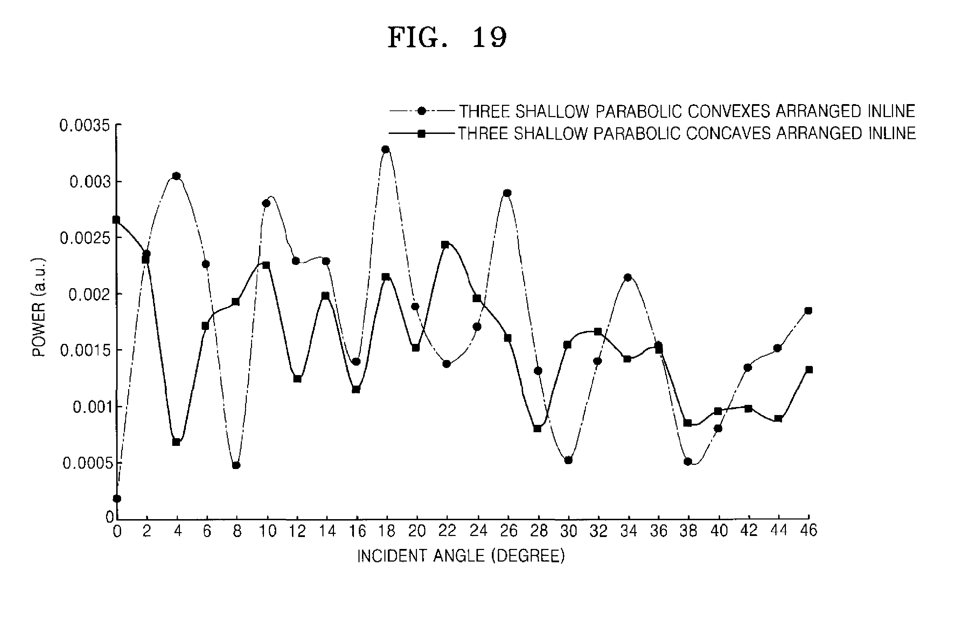

FIG. 19 shows the result of the FDTD calculation of the scattered power collected by the detector located at a position separated by 1m from the reflector in the y-axis direction. In the shallow parabolic structure, the height $y_h$ of the parabolic convex 103' or parabolic concave 103a is less than or equal to the focal length p thereof. The parabolic convex structure exhibits performance superior to that of the parabolic concave structure, in that the directed reflectance is improved by 9%.

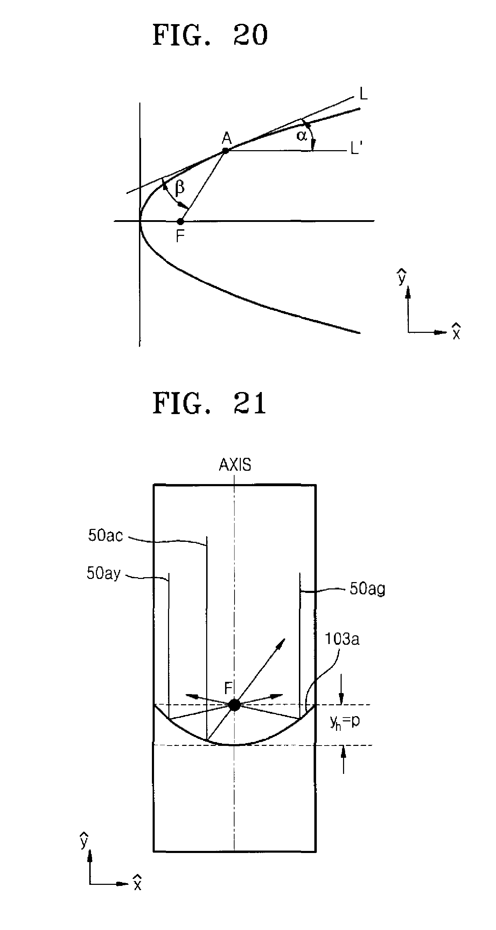

The relatively inferior directed reflectance with respect to the shallow parabolic concave structure can be understood by considering a basic feature of a parabola. For a concise explanation, a parabola in FIG. 20 is considered. A light ray from the focus F of the parabola is reflected by the parabola in a direction parallel to the axis of the parabola. In FIG. 20, a line L is a tangent to the parabola, a point F is a focus, and a light ray AL' is parallel to the x-axis, which is an axis of the parabola. The line L makes angles $\alpha$ and $\beta$ with respect to light rays passing along the segments AL' and FA, respectively, such that certain light rays passing from F to A can be reflected along a segment AL', and certain light rays passing along the segment AL' can be reflected toward F.

As shown in FIG. 21, in the reflection structure of the shallow parabolic concave 103a, the incident light rays 50ay, 50ac, and 50ag, which are initially parallel to the y-axis (a parabolic axis), are reflected by the surface of the parabolic concave 103a and focused at the parabolic focus. Due to the shallow parabolic concave 103a, these reflected light rays pass through a focus to a region where there is no surface to deflect these light rays, and the light rays proceed limitlessly therefrom. For this reason, the light rays 50ay, 50ac, and 50ag are lost.

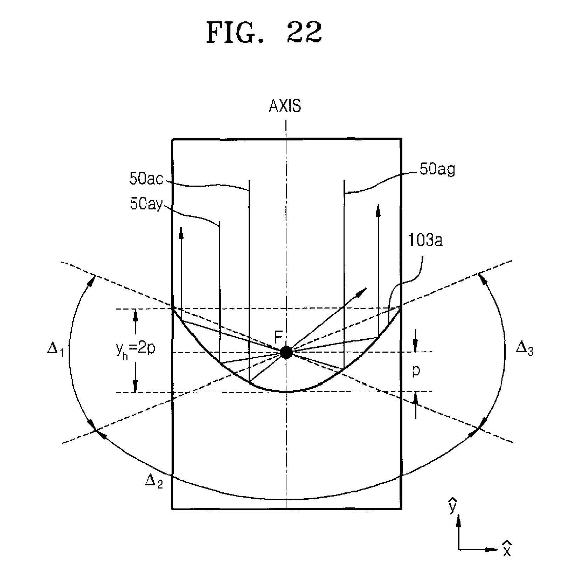

When the height or depth $y_h$ of the parabolic concave 103a increases, the performance of the directed reflectance is greatly improved, as shown in FIG. 22. To explain as simply as possible, only incident light rays 50ay, 50ac, and 50ag are taken into consideration. Certain light rays reflected at points on a surface of the parabolic concave 103a within the angular ranges indicated by $\Delta1$ and $\Delta3$ can proceed in the y-axis direction only. This means that these reflected light rays do not have a component in the x-axis direction. Meanwhile, the light ray 50ac input in parallel with the axis of the parabolic concave 103a, and reflected by a reflection surface of the parabolic concave 103a within the angular range of $\Delta2$, includes both x-axis and y-axis components. Since the detector is located at a position separated by 1m from the surface of the parabolic concave 103a in the y-axis direction, the detection angle $\delta$ can be expressed by Equation 3.

$$\delta = \arctan\left(\frac{\gamma}{\zeta}\right) \qquad \text{[Equation 3]}$$

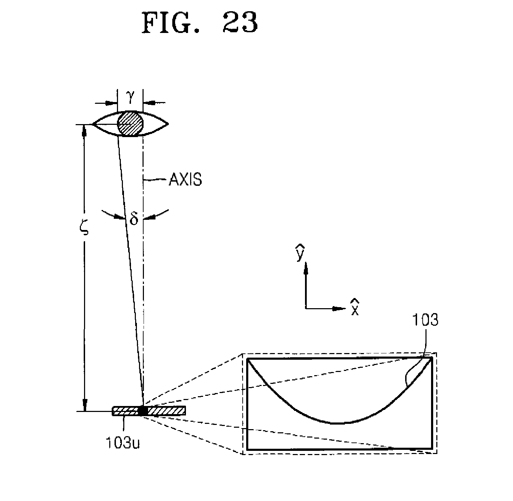

In Equation 3, as shown in FIG. 23, $\zeta$ is a distance between the reflection surface of the parabolic concave 103 and the detector, and $\gamma$ is the width of the detector. Assuming that human eyes are regarded as a physical detector, the width $\gamma$ is about 1 cm. For the detector separated by 1 m from the scatterer 105, $\zeta$ is 1m, that is, $\gamma << \zeta$. A detection angle $\delta$ for higher accuracy is roughly obtained from Equation 4.

$$\delta = \arctan\left(\frac{\gamma}{\zeta}\right)$$
$$\cong \arctan(0.01) \qquad \text{[Equation 4]}$$
$$= 0.57294°$$

When the detector is separated by 0.5 m, which is roughly identical to the length of an arm of a human, from the reflector, the detection angle $\delta$ is $\delta \cong \arctan(0.02) = 1.1458°$. Such a small value of the detection angle $\delta$ means that an x-axis component in the reflected light ray must become very small, or the reflected light ray barely reaches the detector. To improve the overall performance of the directed reflectance, the depth or height $y_h$ of the parabolic concave 103a should be increased, so that an area covered by $\Delta2$ in FIG. 22 is decreased and a portion covered by $\Delta1$ is increased. However, in a micrometer scale, the forming of such a deep parabolic concave is difficult because more stress is applied in the manufacturing process.

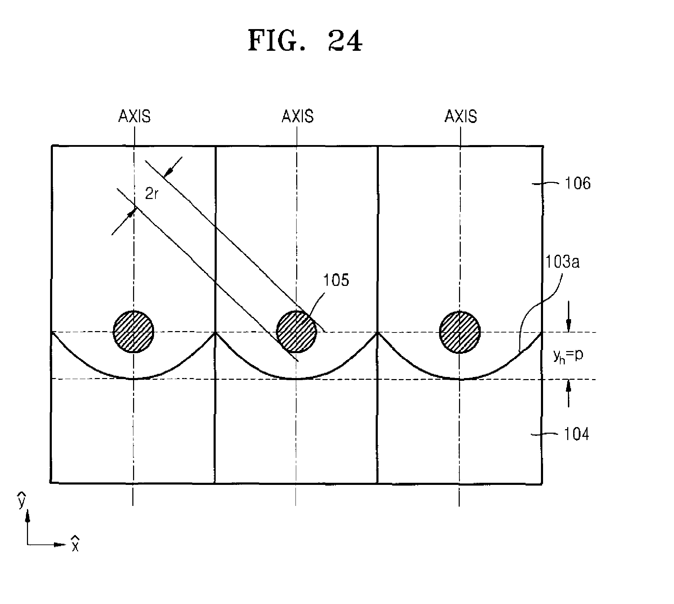

The present invention suggests another solution to improve the directed reflectance of the shallow parabolic concave structure. In exemplary embodiments of the present invention, as shown in FIG. 24, the scatterer 105 can be placed at the focus of the shallow parabolic concave 103a or at a position close thereto. In exemplary embodiments of the present invention, induced radiation produced by the scatterer 105 is used. FIG. 24 shows an example in which a scatterer having a single spherical structure is placed at the focus of each parabolic concave 103a as the scatterer 105.

When an incident beam that is an electromagnetic wave interacts with the scatterer 105 such as a metal spherical particle, a net polarization is induced in the scatterer 105. The induced polarization is a result of the charges of the scatterer 105 reacting to an incident electric field. Since light is an electromagnetic wave that vibrates in time and space, the induced polarization in the scatterer 105 vibrates at the frequency of the incident electromagnetic wave. According to the electric dynamics, the vibrating polarization causes the scatterer 105 located at the focus of the shallow parabolic concave 103a to produce radiation.

Since the induced radiation occurs at the focus of the parabolic concave 103a, the induced radiation light rays from the scatterer 105 are reflected by the reflection surface of the parabolic concave 103a, proceed parallel to the parabolic axis, and are finally collected by the detector located somewhere in the proceeding direction.

The performance of the reflection structure of the exemplary embodiment of the present invention shown in FIG. 24 is compared with the performance of the directed reflection calculated with respect to the shallow parabolic convex 103' and the shallow parabolic concave 103a, respectively shown in FIGS. 16 and 17.

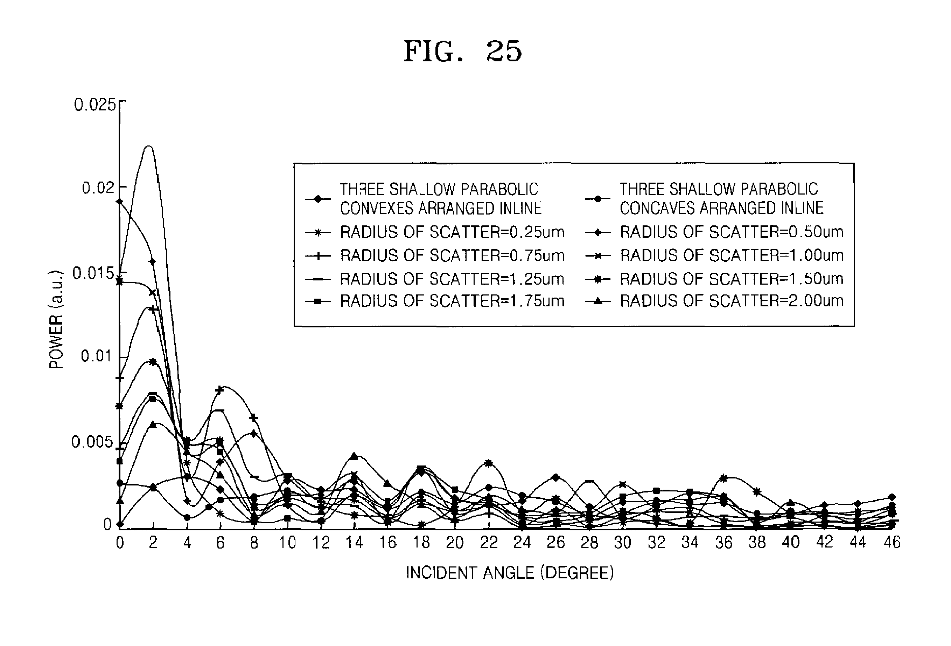

The simulation of exemplary embodiments of the present invention is performed using the structure shown in FIG. 24. The power that is collected by the detector is calculated by increasing the incident angle $\Omega$ of the incident light ray 50a by 2° increments from 0° to 46°. FIG. 25 shows the result of the calculation. The result of the calculation of power collected by the detector shown in FIG. 25 is obtained for the light ray 50st scattered at a reflection angle that is less than or equal to $\delta$. In the calculation, $\delta$ is 2.5°, the medium is a vacuum, and the material of the reflection surface 103 is an aluminum material. The radius r of the spherical scatterer 105 is changed from 0.5 $\mu$m to 1.0 and 1.5 $\mu$m. The material used for the spherical scatterer 105 is aluminum in the simulation.

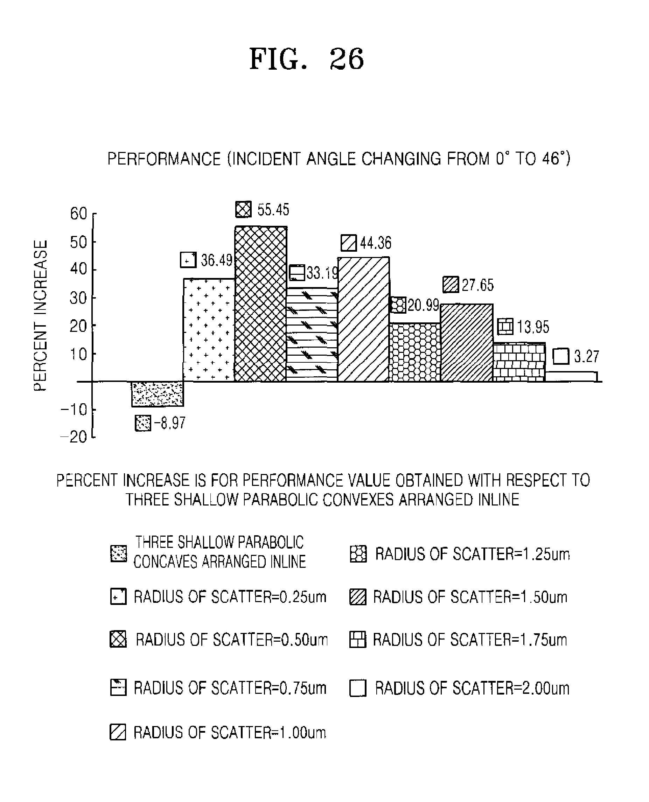

FIGS. 26 through 29 show the percent increase in the performance of exemplary embodiments of the present invention with respect to the shallow parabolic convex 103'. FIGS. 26 through 29 show the result when the depth of a shallow parabola is the same as the focal length p, which is equal to 2$\mu$m.

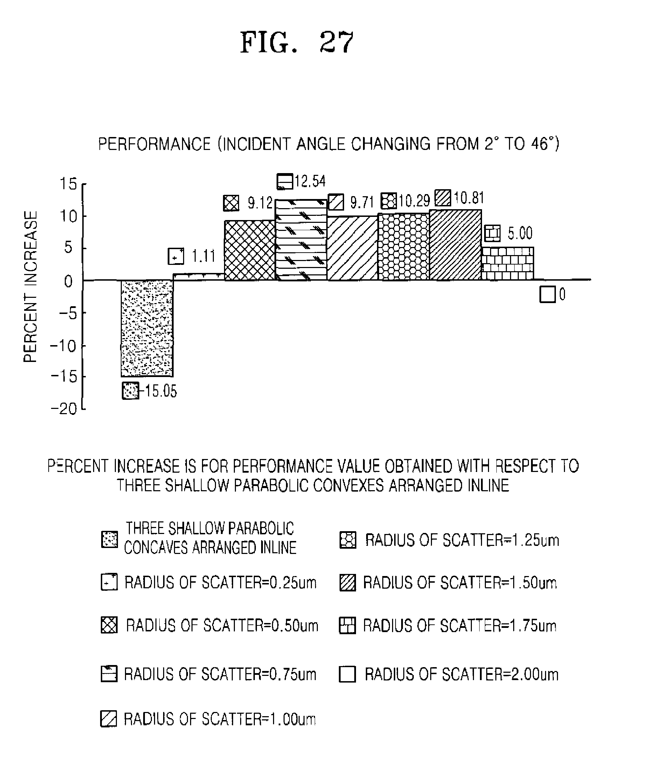

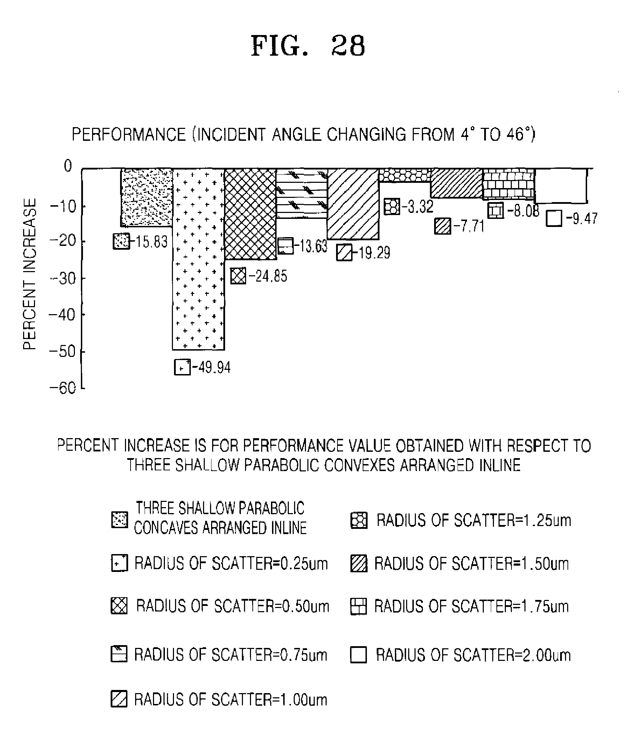

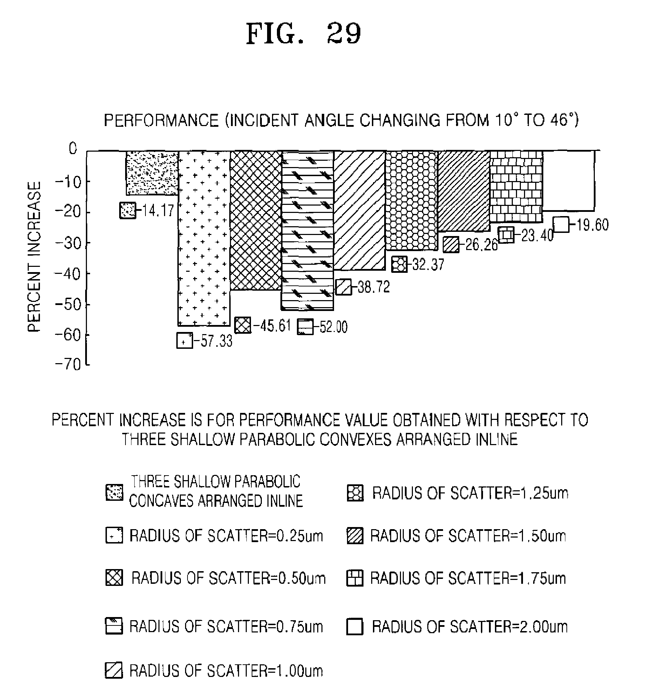

FIG. 26 illustrates the percent increase in performance when the incident angle of the light ray 50a increases by 2° increments between 0° and 46°. FIG. 27 illustrates the percent increase in performance when the incident angle of the light ray 50a increases by 2° increments between 2° and 46°. FIG. 28 illustrates the percent increase in performance when the incident angle of the light ray 50a increases by 2° increments between 4° and 46°. FIG. 29 illustrates the percent increase in performance when the incident angle of the light ray 50a increases by 2° increments between 10° and 46°.

In FIGS. 26 through 29, the percent increase values are compared with the performance values obtained with respect to the three shallow parabolic convexes 103' arranged inline, as shown in FIG. 16. In FIGS. 26 through 29, the directed reflectance performance with respect to the shallow parabolic convex 103' is naturally "0".

In FIGS. 26 through 29, to compare the directed reflectance performance of exemplary embodiments of the present invention with that of the shallow parabolic concave reflector, the increase of the directed reflectance performance of the shallow parabolic concave reflector with respect to the shallow parabolic convex 103' is indicated by percentage. The directed reflectance performances in exemplary embodiments of the present invention in FIGS. 26 through 29 are obtained using the structure of FIG. 24. The directed reflectance performance of the three shallow parabolic concave structures arranged inline are obtained using the structure of FIG. 17.

The percent increases of the directed reflectance performances in exemplary embodiments of the present invention with respect to the shallow parabolic convex 103 in which the incident angle of the incident light ray changes from 0° to 46° are 55.45%, 33.19%, 44.36%, 20.99%, and 27.65%, respectively, when r is 0.50 $\mu$m, 0.75 $\mu$m, 1.00 $\mu$m, 1.25 $\mu$m, and 1.50 $\mu$m. The percent decrease of the directed reflectance performance in the percentage of the shallow parabolic concave 103a compared to the parabolic convex 103 is 8.97%.

The percent increases of the directed reflectance performances in exemplary embodiments of the present invention with respect to the shallow parabolic convex 103 in which the incident angle of the incident light ray changes from 2° to 46° are 9.12%, 12.54%, 9.71%, 10.29%, and 10.81%, respectively, when r is 0.50 $\mu$m, 0.75 $\mu$m, 1.00 $\mu$m, 1.25 $\mu$m, and 1.50 $\mu$m. The percent decrease of the directed reflectance performance of the shallow parabolic concave 103a compared to the parabolic convex 103 is 15.05%.

Briefly, by locating the scatterer 105 which generates induced radiation at the focus of the shallow parabolic concave 103a or a position close thereto, the performance of the reflector is greatly improved compared to both the shallow parabolic concave 103a and the shallow parabolic convex 103' structures. According to exemplary embodiments of the present invention, since the reflection region is formed such that the scatterer which generates induced radiation is located at the focus of the concave reflection curved surface or a position close thereto, the vertical component of the light input from the outside into the liquid crystal panel and reflected by the reflection region can be greatly increased. Thus, according to exemplary embodiments of the present invention, a superior contrast ratio can be embodied for a reflective or transreflective LCD.

While the present invention has been particularly shown and described with reference to exemplary embodiments thereof, it will be understood by those of ordinary skill in the art that various changes in form and details may be made therein without departing from the scope of the present invention as defined by the following claims and their legal equivalents.

**Claims**

**1.** A liquid crystal display (LCD) comprising:

a rear substrate;

a front substrate;

a liquid crystal layer located between the rear substrate and the front substrate; and

a reflection region formed on a region of a surface of the rear substrate which faces the liquid crystal layer, and which reflects light input from outside to illuminate the liquid crystal layer,

wherein the reflection region comprises:

an array of a plurality of concave reflection curved surfaces formed on a first medium layer, wherein the concave reflection curved surfaces face the front substrate;

a scatterer located in a position separated from the concave reflection curved surface and toward the front substrate; and

a second medium layer formed on the concave reflection curved surface of the first medium layer to fix the scatterer with respect to the concave reflection curved surface.

2.  The LCD of claim 1, wherein a cross-section of the concave reflection curved surface is a parabola.

3.  The LCD of claim 2, wherein the scatterer is located at a focus of the concave reflection curved surface, or a position close to the focus of the concave reflection curved surface.

4.  The LCD of claim 2 or 3, wherein a height of the concave reflection curved surface corresponds to a focal length of the parabola.

5.  The LCD of any preceding claim, wherein the second medium layer exposes a portion of the scatterer.

6.  The LCD of any of claims 1 to 4, wherein the second medium layer completely covers the scatterer.

7.  The LCD of any preceding claim, wherein the second medium layer is formed of a transparent dielectric material.

8.  The LCD of any preceding claim, wherein the first medium layer is formed of a metal.

9.  The LCD of any preceding claim, wherein the concave reflection curved surfaces are regularly arranged without contacting one another, or are regularly arranged to contact one another.

10. The LCD of any of claims 1 to 8, wherein the concave reflection curved surfaces and the scatterers are irregularly arranged to contact or be separated from one another.

11. The LCD of any preceding claim, wherein the scatterer is one of a single spherical scatterer, a spherical core-cell scatterer, and a scatterer having an effective spherical structure formed by a cluster of a plurality of scatter particles.

12. The LCD of claim 11, wherein a scatter particle is one of a spherical scatter particle having a core-cell structure and a spherical scatter particle.

13. The LCD of claim 11 or 12, wherein the scatterer is provided to scatter a plurality of color light rays or a single color light ray.

14. The LCD of any preceding claim, further comprising:

a backlight unit provided at the rear of the rear substrate; and

a transmission region which transmits an illumination light emitted from the backlight unit toward the liquid crystal layer;

wherein the LCD is a transreflection type LCD.

15. The LCD of claim 14, further comprising a color filter located at the front substrate, wherein the scatterer scatters a plurality of different color light rays.

16. The LCD of claim 14 or 15, further comprising a color filter formed at a position corresponding to the transmission region, and which allows only a color light ray to pass,
wherein the scatterer scatters the color light ray and the reflection region works as a color filter which transmits the color light ray.

**17.** The LCD of any of claims 1 to 13, wherein the LCD is a reflective type LCD.

**18.** The LCD of claim 17, further comprising a color filter located at the front substrate,
wherein the scatterer scatters a plurality of different color light rays.

**19.** The LCD of claim 17 or 18, wherein the scatterer scatters a color light ray, and the reflection region works as a color filter with respect to the color light ray.

# FIG. 1

# FIG. 2

# FIG. 3

# FIG. 4

# FIG. 5

# FIG. 6

# FIG. 7

# FIG. 8

# FIG. 9

# FIG. 10

# FIG. 11

120

XIII

XIII

105
103

# FIG. 12

105
106

$y_h = p$

103

y

$\hat{x}$

# FIG. 13

# FIG. 14

# FIG. 15

# FIG. 16

# FIG. 17

# FIG. 18

# FIG. 19

EP 1 914 588 A2

# FIG. 20

# FIG. 21

# FIG. 22

# FIG. 23

# FIG. 24

AXIS  AXIS  AXIS

2r

105

106

103a

$y_h$=p

104

$\hat{y}$

$\hat{x}$

FIG. 25

# FIG. 26

PERFORMANCE (INCIDENT ANGLE CHANGING FROM 0° TO 46°)

PERCENT INCREASE IS FOR PERFORMANCE VALUE OBTAINED WITH RESPECT TO
THREE SHALLOW PARABOLIC CONVEXES ARRANGED INLINE

- THREE SHALLOW PARABOLIC CONCAVES ARRANGED INLINE
- RADIUS OF SCATTER=0.25um
- RADIUS OF SCATTER=0.50um
- RADIUS OF SCATTER=0.75um
- RADIUS OF SCATTER=1.00um
- RADIUS OF SCATTER=1.25um
- RADIUS OF SCATTER=1.50um
- RADIUS OF SCATTER=1.75um
- RADIUS OF SCATTER=2.00um

# FIG. 27

**PERFORMANCE (INCIDENT ANGLE CHANGING FROM 2° TO 46°)**

PERCENT INCREASE IS FOR PERFORMANCE VALUE OBTAINED WITH RESPECT TO
THREE SHALLOW PARABOLIC CONVEXES ARRANGED INLINE

| | |
|---|---|
| ▣ THREE SHALLOW PARABOLIC CONCAVES ARRANGED INLINE | ▨ RADIUS OF SCATTER=1.25um |
| ⊡ RADIUS OF SCATTER=0.25um | ▨ RADIUS OF SCATTER=1.50um |
| ▧ RADIUS OF SCATTER=0.50um | ⊞ RADIUS OF SCATTER=1.75um |
| ▤ RADIUS OF SCATTER=0.75um | ☐ RADIUS OF SCATTER=2.00um |
| ▨ RADIUS OF SCATTER=1.00um | |

# FIG. 28

PERFORMANCE (INCIDENT ANGLE CHANGING FROM 4° TO 46°)

PERCENT INCREASE IS FOR PERFORMANCE VALUE OBTAINED WITH RESPECT TO THREE SHALLOW PARABOLIC CONVEXES ARRANGED INLINE

THREE SHALLOW PARABOLIC CONCAVES ARRANGED INLINE

RADIUS OF SCATTER=1.25um

RADIUS OF SCATTER=0.25um

RADIUS OF SCATTER=1.50um

RADIUS OF SCATTER=0.50um

RADIUS OF SCATTER=1.75um

RADIUS OF SCATTER=0.75um

RADIUS OF SCATTER=2.00um

RADIUS OF SCATTER=1.00um

# FIG. 29

PERFORMANCE (INCIDENT ANGLE CHANGING FROM 10° TO 46°)

PERCENT INCREASE IS FOR PERFORMANCE VALUE OBTAINED WITH RESPECT TO
THREE SHALLOW PARABOLIC CONVEXES ARRANGED INLINE

THREE SHALLOW PARABOLIC CONCAVES ARRANGED INLINE

RADIUS OF SCATTER=1.25um

RADIUS OF SCATTER=0.25um

RADIUS OF SCATTER=1.50um

RADIUS OF SCATTER=0.50um

RADIUS OF SCATTER=1.75um

RADIUS OF SCATTER=0.75um

RADIUS OF SCATTER=2.00um

RADIUS OF SCATTER=1.00um